# EUROPEAN PATENT SPECIFICATION

(11) **EP 0 901 594 B1**
(45) Date of publication and mention of the grant of the patent: **09.07.2003**
(21) Application number: 97922757.6
(22) Date of filing: 27.05.1997
(51) Int. Cl.: F16L 41/14, F16L 55/07

(54) **AN OUTLET FITTING FOR PIPES HAVING ROTATABLE SECURING MEANS**
ANSCHLUSS FÜR ROHRE MIT DREHBAREN BEFESTIGUNGSMITTELN
RACCORD POUR SORTIES DE CONDUITES, AVEC ELEMENT DE FIXATION PIVOTANT

(30) Priority: 27.05.1996 AU PO010196
(43) Date of publication of application: 17.03.1999
(73) Proprietor: GOYEN CONTROLS CO. PTY. LIMITED, Milperra, NSW 2214 (AU)
(72) Inventor: BRANDEL, Janusz, Minter, NSW 2566 (AU)
(74) Representative: Gee, Steven William
(86) International application number: AU9700333
(87) International publication number: WO97045669

(56) References cited:
- AU-A- 1 477 333
- AU-A- 1 645 756
- AU-A- 6 514 469
- DE-A- 2 550 202
- GB-A- 278 805
- GB-A- 2 120 340
- US-A- 1 689 575
- US-A- 3 413 019
- US-A- 4 699 217

## Description

### FIELD OF THE INVENTION

The present invention relates to a fitting for the attachment of a pipe or other fitting to another pipe.

### BACKGROUND OF THE INVENTION

Baghouse filtering systems use air compressed by a compressor and stored in a header tube or pipe awaiting use for cleaning of a filter bag or filter cartridge in the baghouse. The air flow to a filter is controlled by means of solenoid valves and these solenoid valves connect the header and a blow tube. Such a connection is performed by providing a seat on the header tube to attach the solenoid valve. The solenoid valves are of a right angled construction allowing relatively easy installation and removal where existing pipes and fittings are in place.

To construct a conventional outlet fitting onto a header tube requires labour intensive processes by the welding of one pipe onto another to provide the flanged seat. This first requires the drilling of a hole in the header tube approximately the same size as the pipe being connected, then welding accurately around the intersection of the two pipe surfaces. At the end of the smaller pipe (which is welded to the bigger pipe) is a flanged surface upon which can be attached the solenoid valve.

These assembly and fabrication operations are costly and expensive.

German patent application 2552202 discloses a pipe flange used to connect a pipe to a container. This consists of a tubular male threaded member with a flange at an end opposite to the location of the threaded end. The tubular male threaded member passes through a hole in the container wall. The tubular male threaded member receives a tubular female threaded member. The end opposite to the location of the thread on the tubular female threaded member receives a conduit which is to be attached to the container. An annular seal is placed around the tubular male member on the outside of the container. The outside wall of the container and the seal are compressed between the flange on the internal end of the tubular male threaded member and the tubular female member when the tubular female member is screwed onto the tubular male member. In this way the pipe flange is secured and sealed to the container wall.

US patent 1689575 relates to a boiler fitting, where the boiler has a special shaped slot through which can be passed a plate to be positioned against the internal wall of the boiler. This plate is inserted through the special shaped slot, without the bolts to assemble the fitting. These are then placed in through the plate and project through the wall of the boiler. On the outside of the boiler and onto the bolts is located a gasket and a threaded mounting plate which is secured to the first mentioned plate by washers and nuts. The assembly sandwiches the boiler wall and the gasket between the first mentioned plate and the mounting plate to create a secured and sealed outlet. The mounting plate has a threaded aperture through it for the connection of a pipe.

### SUMMARY OF THE INVENTION

The invention provides a fitting according to claim 1.

Preferably the conduit engaging end is shaped and sized so as to conform to an outside surface of one of the following: a square conduit; a rectangular conduit; a cylindrical conduit; an other shaped conduit; or tubular conduit.

Preferably if the conduit is of square or rectangular cross section the conduit engaging end is substantially in one plane.

Preferably the conduit engaging end includes means to hold the resiliently compressible seal.

Preferably said mounting surface and said conduit engaging end are located on opposite ends of the fitting to produce a substantially 180° passage therethrough or at an angle other than 180°.

Preferably the at least one sealing surface includes two surfaces at right angles to each other.

Preferably the at least one sealing surface includes two surfaces at right angles to a third surface to form a channel to hold said resiliently compressible seal for engagement with an external surface of said conduit.

Preferably any walls which include a sealing surface extending towards said conduit are of a height not greater than a thickness of said resiliently compressible member, when in a compressed state.

Preferably any walls which include a sealing surface limit the distance that said fitting can move towards said conduit as said resiliently compressible seal is compressed.

Preferably said resiliently compressible seal is selected from one of: the 'O' ring type, the flat type or other resiliently compressible gasket.

Preferably said at least one securing means includes a shaped surface adapted to engage said internal surface of said conduit.

Preferably said shaped surface is adapted to transmit an increasing compressive deflection to said resiliently compressible seal when said at least one securing means is continued to be rotated after said shaped surface initially engages said internal surface of said conduit.

Preferably said fitting and said conduit are secured together and sealed to airtight quality, by the rotation of said at least one securing means.

Preferably a stop means on said at least one securing means prevents it being turned beyond a pre-determined point.

Preferably said pre-determined point is when said shaped surface is in a position to engage said internal surface by movement towards said fitting.

Preferably said pre-determined point is determined by when said resiliently compressible seal is compressed to a maximum possible by said at least one securing means.

Preferably said at least one securing means includes at least one cam surface to engage said internal surface of said conduit.

Preferably said securing means includes a second cam surface and trailing portion the trailing portion to limit the rotation of said securing means.

Preferably said second cam surface and trailing portion are adapted to engage said hole in said conduit.

Preferably said securing means is brought into engagement with said internal surface of said conduit by means of movement in a direction perpendicular to the longitudinal axis of a conduit to which the fitting is to be attached, or parallel to a central axis perpendicular to said hole in a conduit with which the fitting is to be associated.

Preferably a centering means is provided which keeps said first aperture in said conduit engaging end centred on said hole in said conduit.

Preferably there are two securing means.

Preferably the two securing means are diametrically opposed.

Preferably if said fitting is to engage a cylindrical surface, the centering means is provided by said two securing means being diametrically opposed and positioned so as to engage the circumference of said hole in said conduit approximately along an imaginary line parallel to the longitudinal axis of said conduit, running along said internal or external surface of said conduit, said imaginary line also being parallel to, collinear or co-incident with a diameter of said hole, whereby said hole interacts with said securing means and said conduit engaging end of said fitting to prevent circumferential movement of said fitting relative to conduit.

Preferably if said fitting is to engage a flat surface, said centering means are diametrically opposed and are located in two quadrants of said aperture in said conduit engaging end which do not include said two securing means.

The embodiment of the above invention provides an improved assembly system to assemble the fitting into a hole on a conduit. This can be done without drilling a second hole in the diametrically opposite side of the conduit. Once the fitting is attached either a valve can be attached or alternatively another tube or flanged tube can be attached to which a valve can also be connected.

### BRIEF DESCRIPTION OF THE DRAWINGS

Embodiments of the present invention will now be described, by way of example only, in which:
Figure 1 illustrates an embodiment of the present invention in perspective view;
Figure 2 illustrates an underneath perspective view of the apparatus at Fig 1;
Figure 3 illustrates a cross section through the apparatus of Fig 1 along the line VII-VII-;
Figure 4 illustrates a rear perspective view of a cam securing member for use with the fitting of Figure 1;
Figure 5 illustrates a front perspective view of the apparatus at Fig 4;
Figure 6 illustrates a plan view of the apparatus at Fig 4;
Figure 7 illustrates a front elevation of the apparatus of Fig 4;
Figure 8 illustrates a cross section through the apparatus of Fig 4;
Figure 9 illustrates in front view a cross section of the apparatus of Figures 4-8 when combined with the apparatus of Figures 1-3 when attached to a conduit;
Figure 10 illustrates in cross-section a side view of the apparatus of Fig 9.

### DETAILED DESCRIPTION OF THE PREFERRED EMBODIMENTS

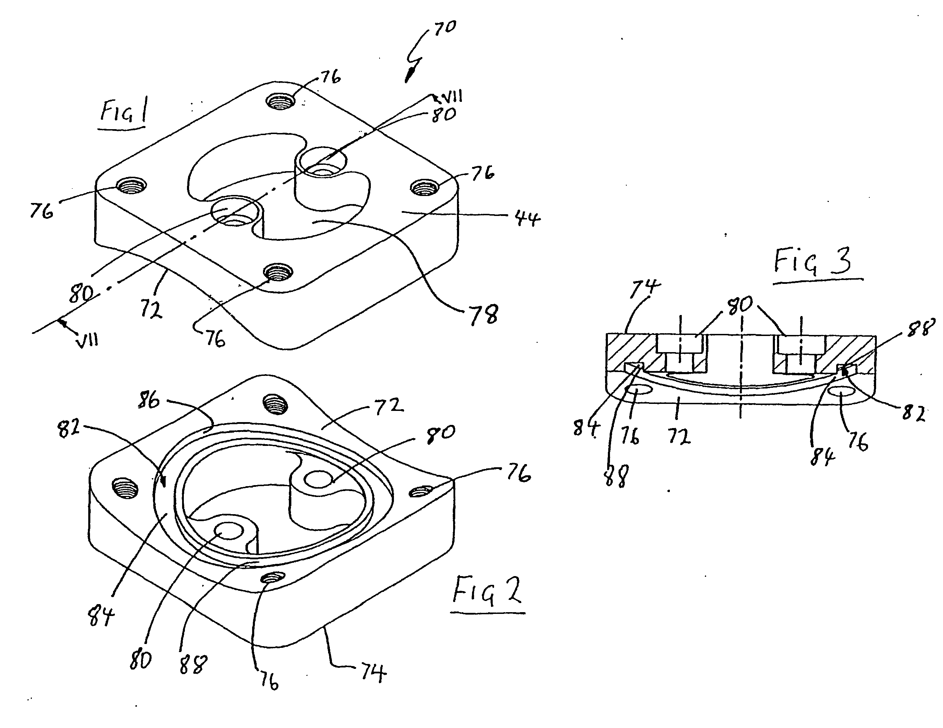

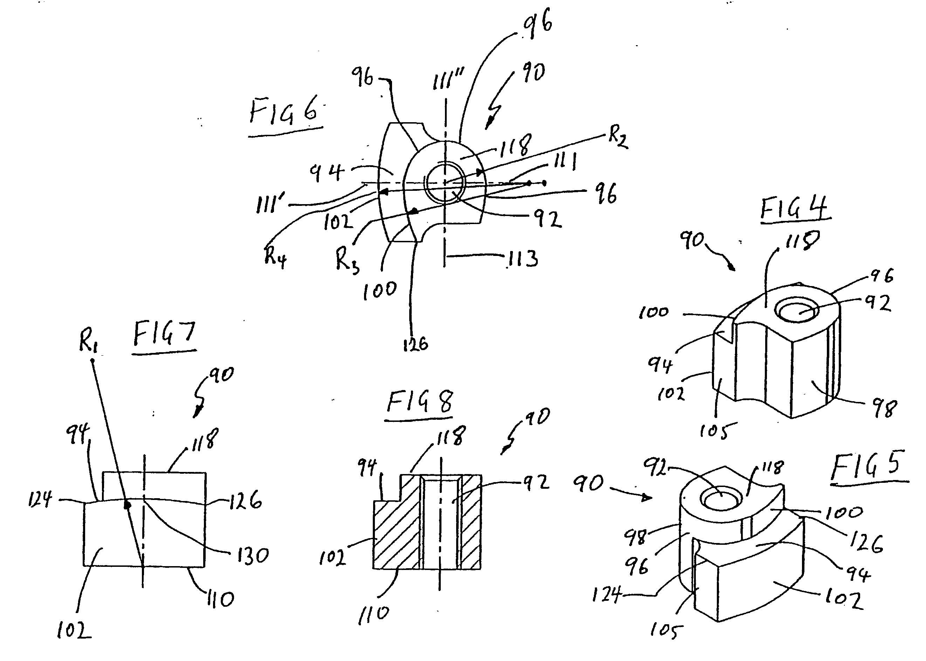

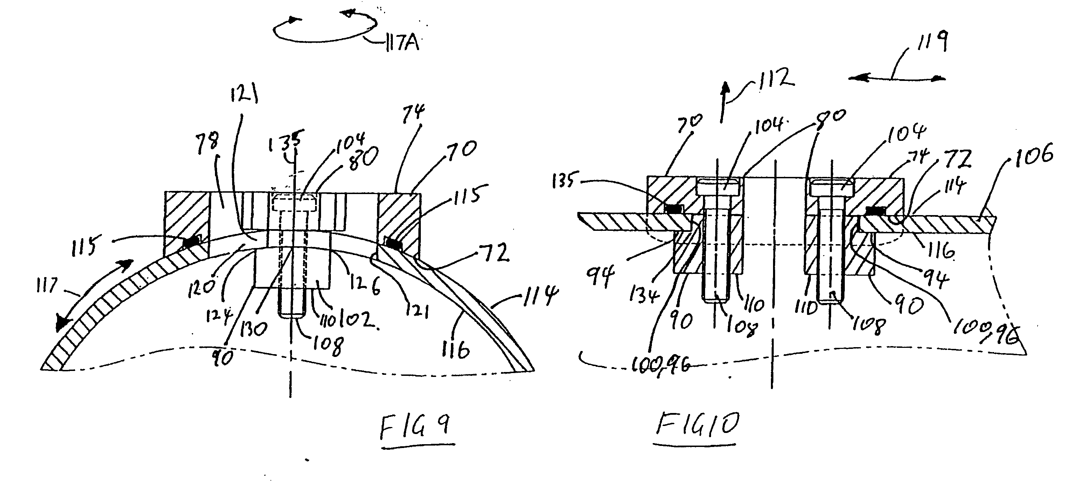

In the Figures 1 to 11 is a fitting made up of a fitting component 70 (illustrated in figures 1 to 3) and a securing member 90 (illustrated in figures 4 to 8) They are shown in combination in figures 9 and 10. The securing means of the fitting is provided by the securing member 90 which can be generally said to operate by providing a clamping force which clamps a conduit wall in the vicinity of a hole which is to cooperate with the fitting The securing member 90, as will be described in detail later, includes a rotating body which engages the hole of the conduit to prevent the body rotating further and which either clamps by virtue of that rotation, or achieves the clamping forces by translation substantially in a straight line.

Illustrated in Figures 1, 2 and 3 is the fitting component 70 which has a generally curved undersurface 72 and a flat top surface 74. The curved under surface 72 has a radius of curvature equal to the radius of curvature of the outside surface of the conduit. This allows for a close matching of the contours when there is engagement with the cylindrical surface of a conduit. The flat top surface 74 is a mounting surface to which can be attached a valve (not illustrated) or flanged pipe (not illustrated) by means of the four threaded holes 76.

An outlet aperture 78 communicates from the curved under surface 72 to the flat top surface 74, and is partially occluded by means of bolt housings 80 which extend into the aperture 78, which are diametrically opposed and are counter-bored so that one portion allows passage only of a bolt shank and the other receives a bolt head so that it is recessed relative to flat top surface 74.

On the under surface 72 is a three sided channel 82 which opens in the direction towards where a conduit to which the fitting will be attached is located. The three sided channel is made up of a first wall 84 which provides a sealing surface, a second wall 86 which provides a second sealing surface perpendicular to the first sealing surface and first wall 84 and a third sealing surface formed with a third wall 88 which is also perpendicular to first sealing surface or first wall 84 but which is spaced apart from the second sealing surface or second wall 86. In the channel 82 there can be positioned an O-ring gasket, a flat gasket or other gasket providing it is resiliently compressible. (The resiliently compressible seal is illustrated as item 115 in Figures 9 and 10.

Illustrated in Figures 4 to 8 is a cam securing member 90 which has a threaded bore 92 through a generally cylindrical body portion 98. A first cam surface 94 is generally positioned perpendicular to the body portion 98 and extends across the body portion 98. The first cam surface engages and interacts with a conduit's internal wall so as to clamp the conduit wall between it and the fitting component 70. The cam surface 94 is curved and is the end surface of a support member 105, which is formed with or attached to the generally cylindrical body 98.

A second cam surface 96 which is formed on the periphery of the generally cylindrical body 98, and has the same radius in the quadrants bounded by axes 111 and 111" & 111" and 111'. The body 98 also includes a cam surface 100 in the quadrant bounded by axes 113 and 111' which is a trailing portion from cam surface 96. Cam surface 100 is of a different radius to that of the cam surface 96 and it starts at the axis 111' and terminates at edge 126. The purpose of the cam surface 100 will be described later. The two different radii of cam surface 96 and 100 blend together to form a relatively smooth surface.

The radius of cam surfaces 94, 96 and 100 can be as desired, but in this embodiment the first cam surface 94 has a radius R₁ of 77mm (this radius of curvature is illustrated in Figure 7). The cam surface 96 has a radius R₂ of 9.7mm (illustrated in Figure 6) and the cam surface 100 has a radius R₃ of 31.5mm. The front face 102 also has a curved surface having a radius R₄ of approximately 37.5mm, but need not be so.

To support the first cam surface 94 a support member 105 is formed with or attached to the body 98 of the cam securing member 90. The support member 105 terminates with front face 102.

Two cam securing members 90 (of Figures 4 to 8) are attached to the fitting component 70 by means of Allen-key bolts 104 as illustrated in cross section in Figures 10 and 11. Depending upon the fitter's preferred practice, the fitting component 70 can be attached to the conduit 106 by at least two methods, depending upon the shape of the conduit 106. See Figures 9 and 10.

The first is for use when the conduit 106 is cylindrical, square or rectangular. In this method the fitter pre-assembles using LOCTITE 222, or similar compound the cam securing member 90 so that the end 108 of the bolts 104 just protrude below the base 110 of the cam securing member 90. LOCTITE 222 is utilised because it prevents any unwanted rotation of the bolt 104 relative to cam securing member 90, but allows the tightening of the bolt 104, and again re-secures the bolt 104 and cam securing member 90 after tightening has occurred. The cam securing members 90 are then rotated so that the faces 102 face each other. When the fitting component 70 (including the resiliently compressible seal 115), is in place against the external surface 114 of conduit 106, the resiliently compressible seal 115 keeps the under surface 72 from engaging external surface 114 of conduit 106, because the resiliently compressible seal 115 is in it uncompressed state. When the fitting component 70 is in position over the hole 120, the securing members 90 are located in the hole 120 so that contact or near contact is made between the side wall 121 of hole 120 and the cam surface 96 somewhere in the quadrant bordered by axes 111" and 111 and or quadrant bordered by axes 113 and 111 of the securing member 90. The length of bolts 104 are sized, and the securing member 90 positioned on the bolt 104 taking into account the distance that the resiliently compressible seal 115 protrudes from the under surface 72 in its uncompressed state. Sufficient distance is left between top surface 188 and the underneath surface of the bolt housings 80.

If the orientation of securing member 90 relative to the fitting component 70 is such that first contact is made with cam surface 100, when the bolt 104 is tightened in a clockwise direction (R.H. thread), the cam securing member 90 cannot rotate because of the engagement of a portion of cam surface 100 with the side wall 121 of hold 120.

However, if the cam surface 96 is near to or engaging the side wall 121 of hole 120, then as the bolt 104 is rotated in a clockwise direction to be tightened, the cam securing member 90 will rotate with the bolt 104 until such time as the cam surface 100 makes contact with side wall 121 of hole 120. When this happens this will prevent any further rotation of cam securing member 90. Because the cam securing member 90 can no longer rotate, any further rotation of the bolt 104 in a tightening direction will move the cam surface 94 in the direction of arrow 112 into contact with the internal surface 116 of conduit 106.

The cam securing member 90 moves toward fitting component 70 until such time as the centre portion 130 of cam surface 94 engages the internal surface 116 of conduit 106. The cam surface 94 having a radius R₁ of 77mm is preferably the same radius as the internal diameter of conduit 106. If desired however it may have a different radius but if so, preferably the radius of cam surface 94 is less than the internal diameter of conduit 106.

As the bolts 104 are tightened the resiliently compressible seal 115 (in this case is an O-ring) situated inside the channel 82 is gradually compressed in the channel 82. When fully compressed it pushes against each of the sealing surfaces 84, 86 and 88 and the external surface of 114 of conduit 106. The undersurface 72 and the wall which includes sealing surface 88 limits the travel of the fitting component 70 towards conduit 106.

The location of the cam surface 100 on the cam securing member 90 will only be effective for a right hand thread (i.e. thread turned clockwise to tighten). If a left hand threaded bolt, and female thread in bore 92 is desired, then the body and features of the cam securing member 90 should be made as a mirror image of that illustrated in Figures 8 to 12.

Another method can also be used with square or rectangular conduits 106. In this other method the bolts 104 (before fitting component 70 is placed on the conduit 106) are passed through the bolt housings 80 and then have attached and secured to them the cam securing member 90. The bolts 104 are done up to a fully tightened position in which case there is no unengaged thread on the bolt 104. That is the unthreaded shank of the bolt 104 is resting near the top surface 118 of the cam securing member 90. Because the cam securing member 90 has been fully tightened with respect to the bolt 104 (together with the use of LOCTITE 222) they now act as a single, integral unit. The components will be kept secured and integrated for any rotation of the bolt 104 in a tightening direction, even though no more tightening between the bolt 104 and member 90 can occur . This means that when the bolt 104 is further rotated in a tightening direction, the cam securing member 90 also rotates with it. Once the cam locking members 90 have been placed in position on the bolts 104, the front faces 102 are rotated so as to face each other. That is, the axes 111' point to each other. The fitting component 70 is then placed over the hole 120 in conduit 106 and the cam securing members 90 are passed through the hole 120 in conduit 106.

In this position the under surface 72 of fitting component 70 will be raised above the external surface 11 of conduit 106 because of resiliently compressible seal 115 having its normal cross section or uncompressed form. The radius R₁ of 77mm of the first cam surface 94 ensures that the front and rear edges 124 and 126 are lower than the centre portion 130. The height from the front and rear edges 124 and 126 to centre portion 130 is the same as or marginally greater than the distance that the under surface 72 sits above the external surface 114 of the conduit when the resiliently compressible seal 115 is in its uncompressed state. This will mean that once the bolt 104 is rotated the front edge 124 of cam securing member 90 will engage the conduit 106 at the edge 134 formed at the intersection of the hole 120 with the internal surface 116. Further rotation of the bolt 104 and thus the cam securing member 90 will force the fitting component 70 towards the conduit 106 thereby compressing the compressible seal 115. The amount of compression provided by the cam securing member 90 is thus the difference in height between the centre portion 130 and the front edge 124 or rear edge 126 of the first cam surface 94.

Because the cam surface 100 of the cam securing member 90 has a radius R₃ which is greater than the radius R₂ of cam surface 96 on the cam securing member 90 cam surface 100 acts as a stop surface. When the cam securing member 90 is rotated by means of the bolt 104, the cam surface 96 rotates over and relative to the surface of hole 120 in the conduit 106 until such time as the cam surface 100 rests up against the hole 120. Because of the greater radius dimension R₃ of cam surface 100, the cam securing member 90 cannot rotate any further once engagement has occurred between cam surface 100 and the side wall of hole 120. Once this happens, the position of the cam securing member 90 will coincide with the centre portion 130 of first cam surface 94 being located against the internal surface 116 of conduit 106 along the diameter which coincides with centre line 135 into the page of Figure 9, along the internal surface 116 of conduit 106 (also coincides with line VII-VII of Figure 1).

For the first method, the length of the bolt 104 is selected so that if the wall of the conduit 106 is thicker than the distance from front or rear edges 124 and 126 to top surface 118, the cam securing member will rest at a position further down the bolt 104 by comparison to the position illustrated in Figure 14 to accommodate the extra thickness of conduit wall 106. For the second method the length of the bolt 104, and the length of the unthreaded shank is selected to accommodate the thickness of conduit wall 106.

Any movement of the fitting component 70 relative to the conduit 106 in either direction indicated by the double arrows 119 (see Figure 10) is prevented by the cam surfaces 100 engaging the wall of the hole 120 in the conduit 106. Any movement of the fitting component 70 relative to the conduit 106 in either direction indicated by the arrow 112 (see Figure 10) is prevented by the cam surfaces 94 engaging the internal surface of the conduit 106. Any movement of the fitting component 70 relative to the conduit 106 in either direction indicated by the double arrows 117 (see Figure 9) is prevented by the cam surfaces 100, because the hole 120 decreases in width (when measured parallel to the longitudinal axis of the conduit) to either side of the hole 120 upper most diameter (which is the diameter which parallel to the longitudinal axis of the conduit). Any such movement in the direction of arrows 117 would require a passage having a width equal to the diameter of the hole 120, that is a aperture having a constant width would have to have been formed, not a circular one. The fitting component 70 will not be able to rotate on the conduit 106 in the directions of arrows 117A, once securing means 90 are secured because of the interaction of the curved under surface 72 with the curved outer surface 114 of the conduit.

Because of the constraints in three orthogonal directions between the receiving members 90 and hole 120, the under surface 72 and outer surface of the conduit, little to no movement between the fitting component 70 and conduit to which it is secured by cam securing members 90 will result. Any movement which may occur because of potential for movement resulting from tolerancing will not break the seal between the fitting component 70 and the external surface of the conduit. That is, any movement possible would be less than the distance from the line of contact of the O-ring 115 furthest from the centre of the hole 120 and the surface 121 of the hole 120.

A centering mechanism is provided by the geometry of the conduit and the geometry of the securing member 90. Because of the curvature R₁ of cam surface 94 engaging the curvature of a cylindrical conduit, the fitting is centred onto the conduit 106. Further, the curved geometry of surface 72 also assists in this centering function.

If desired when the fitting, fitting component 70 and securing means 90 are to be used with a rectangular, square or other flat sided conduit, a centering means comprising two diametrically opposed extensions (not illustrated) which extend away from the inside edge of aperture 78 which are closely toleranced so as to fit into a hole in the conduit, can be provided. These will help to centre the fitting component 70 around the hole in the conduit so as to keep the seal 115 the same distance away from the hole all around its circumference. these two extensions can be located in two quadrants of said aperture in said conduit engaging end which do not include the two securing means 90. This will help to keep the fitting centred on the hole in the conduit, and if the securing means 90 are not finely toleranced with respect to the hole, will ensure that little movement translational movement will be available. Translational movement being of the sort which may break the seal with the external surface of the conduit. While the extensions may not in themselves prevent rotation of the fitting and fitting component 70, such rotational movement would not be of the sort to make the seal move towards the hole in the conduit.

## Claims

1. A fitting (70) having at least one securing means (90) to sealably secure said fitting around a hole (120) in a conduit, said fitting having a conduit engaging end (72) and a mounting surface (74) at another end, said fitting being shaped to cooperate with an external surface (114) of said conduit, said fitting including an aperture (78) which communicates between said conduit engaging end and said mounting surface, said fitting including at least one sealing surface (84,86,88) surrounding said aperture in said conduit engaging end which is adapted to make sealing contact with a resiliently compressible seal (115), said fitting including at least one securing means which is rotatably mounted to said fitting, said at least one securing means, when securing said fitting to said conduit, thereby compressing said resiliently compressible seal between said at least one sealing surface and said external surface of said conduit, said at least one securing means being rotatable relative to said fitting and including a first surface (94) which extends in a direction lateral to the axis of rotation of said securing means, **characterised in that** said at least one securing means is or are rotatable relative to said fitting to an orientation to allow said at least one securing means to enter said hole while attached to said fitting, when the fitting is moved towards the conduit in a position parallel to its final position on the conduit, whereupon once in said hole said at least one securing means is or are rotatable relative to said fitting to an orientation to engage said conduit in the vicinity of said hole, and **in that** said at least one securing means has a second surface (96,100) adapted to engage the wall (121) defining the hole (120) and connecting the inside and the outside of the conduit, said second surface being generally perpendicular to said first surface (94), said second surface including a first portion (96) which extends around said axis of rotation of said securing means, said second surface also including a second portion (100) terminating at a location (126) which is further away from said axis of rotation than said first portion.

2. A fitting as claimed in claim 1 being **characterised by** said conduit engaging end (72) including means (82) to hold a resiliently compressible seal (115).

3. A fitting as claimed in any one of claims 1 or 2, being **characterised by** said at least one sealing surface (84,86,88) being included in a groove or channel (82) and the depth of said groove or channel is selected from one or both of the following: the depth is not greater than the thickness of said resiliently compressible member (115), when in a compressed state; or the depth has a dimension less than the thickness of said resiliently compressible member (115) when in an uncompressed state.

4. A fitting as claimed in any one of claims 1 to 3, being **characterised by** said sealing surface (84,86,88) being spaced from said conduit engaging end by at least one wall formation so that once said conduit engaging end (72) is in contact with said conduit (106) further compression of said resiliently compressible seal is prevented.

5. A fitting as claimed in any one of claims 1 to 4, being **characterised by** said first portion (96) and second portion (100) of said securing means (90) being, in use, positioned adjacent to said wall (121) defining said hole whereby said second portion, in use, will engage said wall to prevent said securing member from rotating past a predetermined point.

6. A fitting as claimed in any one of claims 1 to 5 being **characterised by** said at least one securing means (90) being brought into engagement with an internal surface (116) of said conduit by means of one or more of the following: translation of said securing means in a direction which is lateral to a longitudinal axis of a conduit (106) to which the fitting is to be attached; rotation of said at least one securing means about an axis which is lateral to a longitudinal axis of said conduit.

7. A fitting as claimed in any one of claims 1 to 6 being **characterised by** the provision of a centering means.

8. A fitting as claimed in claim 7 being **characterised by** said centering means being the provision of two securing means (90) being diametrically opposed and positioned on said fitting so as to engage a circumference (121) of said hole (120) so that said hole interacts with said securing means and said conduit engaging end (72) of said fitting to prevent circumferential movement of said fitting relative to said conduit (106).

9. A fitting as claimed in any one of claims 1 to 8, being **characterised by** said at least one securing means (90) having a threaded portion (92) which has a central axis which is coincident with the axis of rotation of said at least one securing means.

10. A fitting as claimed in claim 9, being **characterised by** said at least one securing means (90) being rotatable in said fitting by a bolt (104) passing through said fitting and which is threaded into said threaded portion.

11. A fitting as claimed in any one of claims 1 to 10 being **characterised by** said at least one securing means (90) including a curved surface (94) at the location of contact between the respective securing means and the internal circumferential surface (116) of said conduit (106).

12. A fitting as claimed in any one of claims 1 to 11, being **characterised by** said first portion (96) of said second surface being generally cylindrical.

13. A fitting as claimed in any one of claims 1 to 12, being further **characterised by** there being two securing means (90).

14. A fitting as claimed in claim 13, being **characterised by** said two securing means (90) being diametrically opposed.

## Patentansprüche

1. Fitting (70) mit wenigstens einem Befestigungselement (90) zum abdichtbaren Befestigen des genannten Fittings um ein Loch (120) in einer Leitung herum, wobei das genannte Fitting ein leitungsangreifendes Ende (72) und eine Befestigungsfläche (74) an einem anderen Ende hat, wobei das genannte Fitting zum Zusammenwirken mit einer äußeren Fläche (114) der genannten Leitung geformt ist, wobei das genannte Fitting eine Öffnung (78) hat, die zwischen dem genannten leitungsangreifenden Ende und der genannten Befestigungsfläche kommuniziert, wobei das genannte Fitting wenigstens eine die genannte Öffnung in dem genannten leitungsangreifenden Ende umgebende Dichtfläche (84, 86, 88) hat, die für Abdichtungskontakt mit einer elastisch zusammendrückbaren Dichtung (115) ausgeführt ist, wobei das genannte Fitting wenigstens ein Befestigungselement hat, das drehbar an dem genannten Fitting montiert ist, wobei das genannte wenigstens eine Befestigungselement beim Befestigen des genannten Fittings an der genannten Leitung dadurch die genannte elastisch zusammendrückbare Dichtung zwischen der genannten wenigstens einen Dichtfläche und der genannten äußeren Fläche der genannten Leitung zusammendrückt, wobei das genannte wenigstens eine Befestigungselement relativ zu dem genannten Fitting drehbar ist und eine erste Fläche (94) hat, die sich in einer zu der Drehachse des genannten Befestigungselementes seitlichen Richtung erstreckt, **dadurch gekennzeichnet, dass** das genannte wenigstens eine Befestigungselement relativ zu dem genannten Fitting auf eine Ausrichtung drehbar ist, die das genannte wenigstens eine Befestigungselement in das genannte Loch eindringen lässt, während es an dem genannten Fitting befestigt ist, wenn das Fitting in einer zu seiner endgültigen Position an der Leitung parallelen Position zur Leitung hin bewegt wird, woraufhin das genannte wenigstens eine Befestigungselement, wenn es einmal in dem genannten Loch ist, relativ zu dem genannten Fitting auf eine Ausrichtung zum Angreifen der genannten Leitung in der Nähe des genannten Loches drehbar ist, und dadurch, dass das genannte wenigstens eine Befestigungselement eine zweite Fläche (96, 100) zum Angreifen der das Loch (120) definierenden Wand (121) und zum Verbinden des Inneren und des Äußeren der Leitung hat, wobei die genannte zweite Fläche allgemein senkrecht zu der genannten ersten Fläche (94) ist, wobei die genannte zweite Fläche einen ersten Teil (96) hat, der sich um die genannte Drehachse des genannten Befestigungselementes herum erstreckt, wobei die genannte zweite Fläche auch einen zweiten Teil (100) hat, der an einer Stelle (126) endet, die weiter von der genannten Drehachse weg ist als der genannte erste Teil.

2. Fitting nach Anspruch 1, **dadurch gekennzeichnet, dass** das genannte leitungsangreifende Ende (72) (ein) Mittel (82) zum Halten einer elastisch zusammendrückbaren Dichtung (115) hat.

3. Fitting nach einem der Ansprüche 1 oder 2, **dadurch gekennzeichnet, dass** die genannte wenigstens eine Dichtfläche (84, 86, 88) zu einer Rille oder Nut (82) gehört und die Tiefe der genannten Rille oder Nut aus einem oder beiden der Folgenden ausgewählt ist: die Tiefe ist nicht größer als die Dicke des genannten elastisch zusammendrückbaren Elementes (115), wenn es in einem zusammengedrückten Zustand ist; oder die Tiefe hat eine Größe, die kleiner ist als die Dicke des genannten elastisch zusammendrückbaren Elementes (115), wenn es in einem nicht zusammengedrückten Zustand ist.

4. Fitting nach einem der Ansprüche 1 bis 3, **dadurch gekennzeichnet, dass** die genannte Dichtfläche (84, 86, 88) von dem genannten leitungsangreifenden Ende durch wenigstens ein Wandgebilde beabstandet ist, sodass, wenn das genannte leitungsangreifende Ende (72) mit der genannten Leitung (106) in Kontakt ist, ein weiteres Zusammendrücken der genannten elastisch zusammendrückbaren Dichtung verhindert wird.

5. Fitting nach einem der Ansprüche 1 bis 4, **dadurch gekennzeichnet, dass** der genannte erste Teil (96) und der genannte zweite Teil (100) des genannten Befestigungselementes (90) im Gebrauch an die genannte, das genannte Loch definierende Wand (121) angrenzend positioniert ist, wodurch der genannte zweite Teil im Gebrauch die genannte Wand angreift, um zu verhindern, dass das genannte Befestigungselement sich an einem vorbestimmten Punkt vorbei dreht.

6. Fitting nach einem der Ansprüche 1 bis 5, **dadurch gekennzeichnet, dass** das genannte wenigstens eine Befestigungselement (90) mit Hilfe von einem oder mehreren der Folgenden mit einer inneren Fläche (116) der genannten Leitung in Eingriff gebracht wird: Translation des genannten Befestigungselementes in einer Richtung, die seitlich zu einer Längsachse einer Leitung (106) ist, an der das Fitting anzubringen ist; Drehung des genannten wenigstens einen Befestigungselementes um eine Achse, die seitlich zu einer Längsachse der genannten Leitung ist.

7. Fitting nach einem der Ansprüche 1 bis 6, **dadurch gekennzeichnet, dass** ein Zentriermittel bereitgestellt ist.

8. Fitting nach Anspruch 7, **dadurch gekennzeichnet, dass** das genannte Zentriermittel die Bereitstellung zweier Befestigungselemente (90) ist, die einander genau entgegengesetzt sind und an dem genannten Fitting positioniert sind, um einen Umfang (121) des genannten Loches (120) in Eingriff zu nehmen, damit das genannte Loch mit den genannten Befestigungselementen und dem genannten leitungsangreifenden Ende (72) des genannten Fittings zusammenwirkt, um eine Bewegung des genannten Fittings in Umfangsrichtung relativ zu der genannten Leitung (106) zu verhindern.

9. Fitting nach einem der Ansprüche 1 bis 8, **dadurch gekennzeichnet, dass** das genannte wenigstens eine Befestigungselement (90) einen mit Gewinde versehenen Teil (92) hat, der eine zentrale Achse hat, die mit der Drehachse des genannten wenigstens einen Befestigungselementes zusammenfällt.

10. Fitting nach Anspruch 9, **dadurch gekennzeichnet, dass** das genannte wenigstens eine Befestigungselement (90) durch eine Schraube (104), die durch das genannte Fitting hindurchgeht und in den genannten mit Gewinde versehenen Teil eingeschraubt wird, in dem genannten Fitting drehbar ist.

11. Fitting nach einem der Ansprüche 1 bis 10, **dadurch gekennzeichnet, dass** das wenigstens eine Befestigungselement (90) an der Berührungsstelle zwischen dem betreffenden Befestigungselement und der inneren Umfangsfläche (116) der genannten Leitung (106) eine gekrümmte Fläche (94) hat.

12. Fitting nach einem der Ansprüche 1 bis 11, **dadurch gekennzeichnet, dass** der genannte erste Teil (96) der genannten zweiten Fläche allgemein zylindrisch ist.

13. Fitting nach einem der Ansprüche 1 bis 12, ferner **dadurch gekennzeichnet, dass** es zwei Befestigungselemente (90) gibt.

14. Fitting nach Anspruch 13, **dadurch gekennzeichnet, dass** die genannten zwei Befestigungselemente (90) einander genau entgegengesetzt sind.

## Revendications

1. Raccord (70) possédant au moins un moyen de fixation (90) servant à assujettir de façon étanche ledit raccord autour d'un trou (120) dans un conduit, ledit
raccord comportant une extrémité d'engagement de conduit (72), et une surface de montage (74) au niveau d'une autre extrémité, ledit raccord étant façonné pour agir en interaction avec une surface externe (114) dudit conduit, ledit raccord incluant une ouverture (78) qui assure une communication entre ladite extrémité d'engagement de conduit et ladite surface de montage, ledit raccord incluant au moins une surface de scellement (84, 86, 88) entourant ladite ouverture dans ladite extrémité d'engagement de conduit qui est adaptée pour établir un contact de scellement avec un joint élastiquement compressible (115), ledit raccord incluant au moins un moyen de fixation qui est monté de façon rotative sur ledit raccord, ledit au moins un moyen de fixation, lorsqu'il assujettit ledit raccord sur ledit conduit, comprimant par conséquent ledit joint élastiquement compressible entre ladite au moins une surface de scellement et ladite surface externe dudit conduit, ledit au moins un moyen de fixation étant capable de tourner par rapport audit raccord et incluant une première surface (94) qui s'étend dans une direction latérale par rapport à l'axe de rotation dudit moyen de fixation, **caractérisé en ce que** ledit au moins un moyen de fixation est capable, ou sont capables, de tourner par rapport audit raccord selon une certaine orientation pour permettre audit au moins un moyen de fixation de pénétrer dans ledit trou alors qu'il est attaché sur ledit raccord, lorsque le raccord est déplacé vers le conduit pour se mettre dans une position qui est parallèle à sa position définitive sur le conduit, après quoi, une fois qu'il se trouve dans ledit trou, ledit au moins un moyen de fixation est capable, ou sont capables, de tourner par rapport audit raccord selon une certaine orientation afin de s'engager avec ledit conduit dans le voisinage dudit trou, et **en ce que** ledit au moins un moyen de fixation possède une deuxième surface (96, 100) qui est adaptée pour s'engager avec la paroi (121) définissant le trou (120) et raccordant la face interne et la face externe du conduit, ladite deuxième surface étant généralement perpendiculaire à ladite première surface (94), ladite deuxième surface incluant une première section (96) qui s'étend autour dudit axe de rotation dudit moyen de fixation, ladite deuxième surface incluant également une deuxième section (100) se terminant en un emplacement (126) qui est plus éloigné dudit axe de rotation que ladite première section.

2. Raccord, selon la revendication 1, étant **caractérisé par** ladite extrémité d'engagement de conduit (72) qui comporte un moyen (82) pour maintenir un joint élastiquement compressible (115).

3. Raccord, selon l'une quelconque des revendications 1 ou 2, étant **caractérisé par** ladite au moins une surface de scellement (84, 86, 88) qui est incluse dans une rainure ou une section en U (82) et la profondeur de ladite rainure ou section en U est sélectionnée sur la base de l'un ou des deux critères suivants : la profondeur n'est pas supérieure à l'épaisseur dudit élément élastiquement compressible (115) lorsqu'il se trouve dans un état comprimé ; ou la profondeur a une dimension qui est inférieure à l'épaisseur dudit élément élastiquement compressible (115) lorsqu'il se trouve dans un état non comprimé.

4. Raccord, selon l'une quelconque des revendications 1 à 3, étant **caractérisé par** ladite surface de scellement (84, 86, 88) qui est espacée de ladite extrémité d'engagement de conduit grâce à une formation de paroi au moins, de sorte que, une fois que ladite extrémité d'engagement de conduit (72) est en contact avec ledit conduit (106), une compression supplémentaire dudit joint élastiquement compressible ne peut pas se produire.

5. Raccord, selon l'une quelconque des revendications 1 à 4, étant **caractérisé par** lesdites première section (96) et deuxième section (100) dudit moyen de fixation (90) qui, au moment de l'utilisation, sont positionnées de façon adjacente à ladite paroi (121) définissant ledit trou, cas dans lequel ladite deuxième section, au moment de l'utilisation, va s'engager avec ladite paroi pour empêcher ledit élément de fixation de tourner au-delà d'un point prédéterminé.

6. Raccord, selon l'une quelconque des revendications 1 à 5, étant **caractérisé par** ledit au moins un moyen de fixation (90) qui est mis en engagement avec une surface interne (116) dudit conduit par l'intermédiaire de l'une ou de plusieurs des actions suivantes : la translation dudit moyen de fixation dans une direction qui est latérale par rapport à un axe longitudinal d'un conduit (106) sur lequel le raccord est destiné à être attaché ; la rotation dudit au moins un moyen de fixation autour d'un axe qui est latéral par rapport à un axe longitudinal dudit conduit.

7. Raccord, selon l'une quelconque des revendications 1 à 6, étant **caractérisé par** la mise à disposition d'un moyen de centrage.

8. Raccord, selon la revendication 7, étant **caractérisé par** ledit moyen de centrage étant la mise à disposition de deux moyens de fixation (90) qui sont diamétralement opposés et sont positionnés sur ledit raccord de manière à s'engager avec une circonférence (121) dudit trou (120) de telle sorte que ledit trou ait une interaction avec ledits moyens de fixation et ladite extrémité d'engagement de conduit (72) dudit raccord afin d'empêcher tout mouvement circonférentiel dudit raccord par rapport audit conduit (106).

9. Raccord, selon l'une quelconque des revendications 1 à 8, étant **caractérisé par** ledit au moins un moyen de fixation (90) qui possède une section filetée (92) qui a un axe central qui est coïncident avec l'axe de rotation dudit au moins un moyen de fixation.

10. Raccord, selon la revendication 9, étant **caractérisé par** ledit au moins un moyen de fixation (90) qui est capable de tourner dans ledit raccord par le biais d'un boulon (104) qui passe à travers ledit raccord et qui est vissé dans ladite section filetée.

11. Raccord, selon l'une quelconque des revendications 1 à 10, étant **caractérisé par** ledit au moins un moyen de fixation (90) qui inclut une surface courbe (94) au niveau de la zone de contact entre les moyens de fixation respectifs et la surface circonférentielle interne (116) dudit conduit (106).

12. Raccord, selon l'une quelconque des revendications 1 à 11, étant **caractérisé par** ladite première section (96) de ladite deuxième surface qui est généralement cylindrique.

13. Raccord, selon l'une quelconque des revendications 1 à 12, étant **caractérisé en outre par le fait que** deux moyens de fixation (90) sont prévus.

14. Raccord, selon la revendication 13, étant **caractérisé par** lesdits deux moyens de fixation (90) qui sont diamétralement opposés.
